# FASCICULE DE BREVET EUROPEEN

(11) **EP 3 102 431 B1**
(45) Date de publication et mention de la délivrance du brevet: **22.08.2018**
(21) Numéro de dépôt: 15701224.6
(22) Date de dépôt: 27.01.2015
(51) Int. Cl.: B60C 1/00, C08L 15/00

(54) **BANDE DE ROULEMENT POUR PNEUMATIQUE À BASE DE POLYISOPRÈNE ÉPOXYDÉ**
LAUFFLÄCHE FÜR REIFEN AUF BASIS VON EPOXIDIERTEM POLYISOPREN
TREAD FOR TIRE BASED ON EPOXIDIZED POLYISOPRENE

(30) Priorité: 07.02.2014 FR 1450967
(43) Date de publication de la demande: 14.12.2016
(73) Titulaire: Compagnie Générale des Etablissements Michelin, 63000 Clermont-Ferrand (FR)
(72) Inventeur: JOSEPH, Aurélie, F-63040 Clermont-Ferrand Cedex 9 (FR); CLADIERE, Julien, F-63040 Clermont-Ferrand Cedex 9 (FR)
(74) Mandataire: Wroblewski, Nicolas Paul André
(86) Numéro de dépôt international: PCT/EP2015/051591
(87) Numéro de publication internationale: WO 2015/117863

(56) Documents cités:
- US-A- 5 488 077

## Description

Le domaine de la présente invention est celui des bandes de roulement pour pneumatique, en particulier des bandes de roulement pour pneumatique destiné à équiper des véhicules portant de lourdes charges.

Afin d'améliorer la résistance à l'usure des pneumatiques pour véhicules transportant de lourdes charges, la bande de roulement de tels pneumatiques doit présenter un certain niveau de rigidité à cuit. Pour augmenter la rigidité à cuit d'une bande de roulement, il est connu par exemple d'augmenter le taux de charge ou d'introduire des copolymères de styrène et de butadiène à fort taux de styrène dans la composition de caoutchouc de la bande de roulement. Mais ces solutions ont généralement pour inconvénient d'augmenter l'hystérèse de la bande de roulement. L'utilisation d'une bande de roulement hystérétique dans un pneumatique destiné à équiper des véhicules transportant de lourdes charges peut se manifester par une élévation de la température interne du pneumatique, ce qui peut entrainer une diminution de l'endurance (en anglais « durability ») du pneumatique. Cette problématique d'améliorer le compromis de performance entre la résistance à l'usure et l'endurance du pneumatique est d'autant plus vraie pour les pneumatiques qui sont montés sur des véhicules portant de lourdes charges et circulant sur des sols hors la route, en raison de la nature non bitumineuse du sol de roulage et du poids des charges portées. Sont particulièrement concernés par cette problématique les véhicules de chantier ou les véhicules de génie civil.

Au vu de ce qui précède, il existe un objectif permanent de fournir des bandes de roulement pour pneumatique qui présentent un compromis amélioré entre la rigidité à cuit et l'hystérèse.

Les Demanderesses ont découvert qu'une bande de roulement spécifique pour pneumatique permet d'atteindre cet objectif.

Ainsi un premier objet de l'invention est une bande de roulement pour pneumatique, laquelle bande de roulement comporte une composition de caoutchouc comprenant :
- de plus de 50 à 100 pce d'une matrice polyisoprène, la matrice polyisoprène contenant un polyisoprène époxydé ayant un taux molaire d'époxydation allant de 5% à moins de 50%,
- un noir de carbone et une silice, la masse de noir de carbone étant supérieure à 50% de la masse totale de noir de carbone et de silice,
- de 0 à moins de 2 pce d'un agent de couplage,
- un système de réticulation,
   le polyisoprène époxydé étant un caoutchouc naturel époxydé ou un polyisoprène de synthèse époxydé ayant un taux molaire de liaison 1,4-cis d'au moins 90% avant époxydation ou leur mélange,
   **à condition que** si le polyisoprène époxydé est un polyisoprène époxydé ayant un taux molaire d'époxydation de 5% à 25%, la composition de caoutchouc contient plus de 50 pce de polyisoprène époxydé.

L'invention concerne également un pneumatique qui comprend la bande de roulement conforme à l'invention.

L'invention concerne également un procédé pour fabriquer la bande de roulement conforme à l'invention.
L'invention concerne aussi un procédé pour fabriquer le pneumatique conforme à l'invention.

### I. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomères présents dans la composition de caoutchouc.

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

On entend par matrice polyisoprène l'ensemble des polyisoprènes et des polyisoprènes époxydés présents dans la composition de caoutchouc.

On entend par polyisoprène un polyisoprène qui n'est pas époxydé. Le polyisoprène peut être le caoutchouc naturel, un polyisoprène de synthèse ayant un taux molaire de liaison 1,4-cis d'au moins 90% ou encore leur mélange.

On entend par polyisoprène époxydé un caoutchouc naturel époxydé ou un polyisoprène de synthèse époxydé ayant un taux molaire de liaison 1,4-cis d'au moins 90% avant époxydation ou leur mélange.

Le polyisoprène époxydé qui constitue en totalité ou en partie la matrice polyisoprène est un élastomère et n'est pas à confondre avec un polyisoprène époxydé de faible masse molaire généralement utilisé comme plastifiant. Un polyisoprène époxydé en tant qu'élastomère a généralement une viscosité Mooney à l'état cru élevée. La viscosité Mooney (ML 1+4) à 100°C du polyisoprène époxydé est supérieure préférentiellement à 20, plus préférentiellement à 30, encore plus préférentiellement à 40. Elle est aussi généralement inférieure ou égale à 150. A titre indicatif, les viscosités Mooney (ML 1+4) à 100°C des caoutchoucs naturels époxydés à 25% molaire peuvent être de l'ordre de 40 à 150. Les gammes de la viscosité Mooney du polyisoprène époxydé sont préférentiellement de 30 à 150, plus préférentiellement de 40 à 150, encore plus préférentiellement de 50 à 140. Ces valeurs préférentielles de viscosité Mooney s'appliquent à l'un quelconque des modes de réalisation de l'invention.

La viscosité Mooney est mesurée à l'aide d'un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (par exemple 100°C). Après 1 minute de préchauffage, le rotor tourne au sein de l'éprouvette à 2 tours/minute et on mesure le couple utile pour entretenir ce mouvement après 4 minutes de rotation. La viscosité Mooney (ML 1+4) est exprimée en "unité Mooney" (UM, avec 1 UM=0,83 Newton.mètre).

Le polyisoprène époxydé, qu'il soit un caoutchouc naturel époxydé ou un polyisoprène de synthèse époxydé, peut être obtenu de manière connue par époxydation du polyisoprène, par exemple par des procédés à base de chlorohydrine ou de bromohydrine ou des procédés à base de peroxydes d'hydrogène, d'hydroperoxydes d'alkyles ou de peracides (tel que l'acide peracétique ou l'acide performique). Les polyisoprènes époxydés sont disponibles commercialement. Le taux molaire d'époxydation, qui est une donnée fournisseurs, correspond au rapport du nombre de moles d'unité isoprene époxydées sur le nombre de moles d'unité isoprene dans le polyisoprène avant époxydation.

Selon la présente invention, le terme « un polyisoprène époxydé » doit être compris comme un ou plusieurs polyisoprènes époxydés qui peuvent se différencier soit par leur microstructure, leur macrostructure ou leur taux d'époxydation. Dans le cas de plusieurs polyisoprènes époxydés dans la matrice polyisoprène, la référence à la quantité de polyisoprène époxydé dans la matrice polyisoprène s'applique à la masse totale des polyisoprènes époxydés de la matrice polyisoprène. Par exemple la caractéristique selon laquelle le polyisoprène époxydé est présent dans la composition de caoutchouc à un taux supérieur à 50 pce signifie qu'en cas de mélange de polyisoprènes époxydés, la masse totale de polyisoprènes époxydés est supérieur à 50 pce.

Dans le cas où le polyisoprène époxydé est un mélange de polyisoprènes époxydés qui peuvent se différencier des uns des autres par leur taux molaire d'époxydation, la référence à un taux molaire d'époxydation, qu'il soit préférentiel ou non, s'applique à chacun des polyisoprènes époxydés du mélange.

Dans le cas où le polyisoprène époxydé est un polyisoprène époxydé ayant un taux molaire d'époxydation de 5% à 25%, la composition de caoutchouc contient plus de 50 pce de polyisoprène époxydé. Autrement dit, étant donné les définitions précédentes, lorsque la matrice polyisoprène ne contient pas d'autre polyisoprène époxydé qu'un polyisoprène époxydé ayant un taux molaire d'époxydation de 5 à 25% ou qu'un mélange de polyisoprènes époxydés qui ont chacun un taux molaire d'époxydation de 5 à 25%, la composition de caoutchouc contient plus de 50 pce de ce polyisoprène époxydé ou de ce mélange de polyisoprènes époxydés. Un taux minimum de plus de 50 pce d'un tel polyisoprène époxydé dans la composition de caoutchouc permet d'améliorer le compromis de propriétés entre la rigidité, le module de cisaillement à 100% d'allongement et l'hystérèse de la composition à l'état cuit.

Selon un mode de réalisation préférentiel de l'invention, le polyisoprène époxydé est un caoutchouc naturel époxydé.

Selon un mode de réalisation particulier de l'invention, la matrice polyisoprène contient un polyisoprène ayant un taux molaire de liaison 1,4-cis d'au moins 90%. Selon ce mode de réalisation particulier de l'invention, la matrice polyisoprène est de préférence un mélange d'un polyisoprène ayant un taux molaire de liaison 1,4-cis d'au moins 90% et du polyisoprène époxydé. Selon ce mode de réalisation particulier, sous sa forme préférentielle ou non, le polyisoprène ayant un taux molaire de liaison 1,4-cis d'au moins 90% est le caoutchouc naturel.

Le polyisoprène époxydé qu'il soit issu de l'époxydation d'un polyisoprène de synthèse ou du caoutchouc naturel, a un taux molaire d'époxydation allant de 5% à moins de 50%. Quand le taux molaire d'époxydation est inférieur à 5%, l'effet technique visé est considéré comme insuffisant tandis qu'à un taux égal ou supérieur à 50%, la composition devient trop rigide, en particulier pour une application en bande de roulement de pneumatique pour véhicules portant de lourdes charges, en particulier ceux roulant hors la route. Le taux molaire d'époxydation est préférentiellement de 5 à 40%, plus préférentiellement de 5 à 35%, encore plus préférentiellement de 10 à 35%.

Selon un mode de réalisation tout particulièrement préférentiel de l'invention, le polyisoprène époxydé est un polyisoprène époxydé ayant un taux molaire d'époxydation de 5 à 30%, préférentiellement de 5 à 25%.

Le taux de la matrice polyisoprène dans la composition de caoutchouc est de plus de 50 pce à 100 pce. Le taux de la matrice polyisoprène dans la composition de caoutchouc est préférentiellement supérieur à 80 pce, plus préférentiellement égal à 100 pce. Ces modes de réalisation préférentiels sont notamment avantageux pour l'utilisation de la composition de caoutchouc en tant que bande de roulement d'un pneumatique pour véhicule destiné à porter de lourdes charges, en particulier du point de vue de l'endurance du pneumatique.

Selon le mode de réalisation dans lequel le polyisoprène époxydé est un polyisoprène époxydé ayant un taux molaire d'époxydation de 5 à 35%, de préférence de 5 à 30%, de manière plus préférentielle de 5% à 25%, le taux de polyisoprène époxydé est préférentiellement supérieur à 80 pce, plus préférentiellement égal à 100 pce.

Lorsque le taux de la matrice polyisoprène est inférieur à 100 pce, la composition de caoutchouc contient un autre élastomère, préférentiellement diénique.

Par élastomère (ou indistinctement caoutchouc) "diénique", doit être compris de manière connue un (ou plusieurs) élastomère constitué au moins en partie (i.e., un homopolymère ou un copolymère) d'unités monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyl ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention:
(a) - tout homopolymère d'un monomère diène conjugué, notamment tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone.

Dans le cas de copolymères du type (b), ceux-ci contiennent de 20 à 99% en poids d'unités diéniques et de 1 à 80% en poids d'unités vinylaromatiques.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

L'élastomère diénique est de préférence un élastomère diénique essentiellement insaturé choisi dans le groupe constitué par les polybutadiènes, les copolymères de butadiène, les copolymères d'isoprène et leurs mélanges.

Avantageusement la composition de caoutchouc de la bande de roulement conforme à l'invention est dépourvue de caoutchouc butyl. Au cas où la composition de caoutchouc de la bande de roulement conforme à l'invention contiendrait un caoutchouc butyl, sa teneur est de préférence inférieure à 5 pce.

La composition de caoutchouc a pour caractéristique essentielle de comprendre un noir de carbone et une silice. La masse de noir de carbone est supérieure à 50% de la masse totale de noir de carbone et de silice.

Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Parmi ces derniers, on citera plus particulièrement les noirs de carbone renforçants des séries 100, 200, 300 (grade ASTM), comme par exemple les noirs N115, N134, N234, N375.

Selon un mode de réalisation préférentiel de l'invention, le noir de carbone présente une surface spécifique BET d'au moins 90 m²/g, préférentiellement d'au moins 100 m²/g. La surface spécifique BET des noirs de carbone est mesurée selon la norme D6556-10 [méthode multipoints (au minimum 5 points) - gaz : azote - domaine de pression relative P/P0 : 0.01 à 0.5].

La silice utilisée peut être toute silice connue de l'homme du métier, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique.

La silice utilisée peut être une silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. On peut citer comme exemple de silice utile pour les besoins de l'invention la silice « Ultrasil VN3 » commercialisée par la société Evonik. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

L'état physique sous lequel se présente la silice est indifférent, que ce soit sous forme de poudre, de microperles, de granulés, ou encore de billes. Bien entendu on entend également par silice des mélanges de différentes silices.

Pour rendre la silice renforçante dans une composition de caoutchouc diénique, il est connu d'utiliser un agent de couplage pour coupler la silice à l'élastomère diénique. L'agent de couplage, le plus souvent un silane, (ou agent de liaison) au moins bifonctionnel permet d'assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Le taux de l'agent de couplage est de 0 à moins de 2 pce.

Comme agent de couplage sont utilisés notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (V)

Z - A - Sₓ - A - Z (V)

dans laquelle :
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 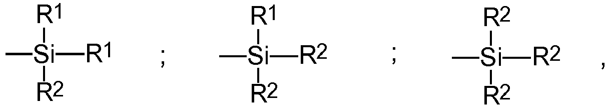 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

A titre d'agent de couplage autre qu'alkoxysilane polysulfuré, on citera notamment des POSS (polyorganosiloxanes) bifonctionnels ou encore des polysulfures d'hydroxysilane tels que décrits dans les demandes de brevets WO 02/30939 (ou US 6,774,255), WO 02/31041 (ou US 2004/051210) ou encore des silanes ou POSS porteurs de groupements fonctionnels azo-dicarbonyle, tels que décrits par exemple dans les demandes de brevets WO 2006/125532, WO 2006/125533, WO 2006/125534.

Selon un mode de réalisation de l'invention, le taux de noir de carbone dans la composition de caoutchouc est de 30 à 90 pce, préférentiellement de 30 à 70 pce, plus préférentiellement de 35 à 60 pce. Ces plages préférentielles s'appliquent à l'un quelconque des modes de réalisation de l'invention.

Selon un mode de réalisation préférentiel de l'invention, le taux de silice utilisée est supérieur à 0 pce et inférieur ou égal à 35 pce, de préférence va de 2 pce à 35 pce, de préférence de 3 à 30 pce, et notamment de 5 à 20 pce. Ces plages préférentielles s'appliquent à l'un quelconque des modes de réalisation de l'invention.

Selon un mode de réalisation de l'invention, la composition de caoutchouc contient un agent de recouvrement de la silice. Parmi les agents de recouvrement de la silice, on peut citer par exemple des hydroxysilanes ou des silanes hydrolysables tels que des hydroxysilanes (voir par exemple WO 2009/062733), des alkylalkoxysilanes, notamment des alkyltriéthoxysilanes comme par exemple le 1-octyl-tri-éthoxysilane, des polyols (par exemple diols ou triols), des polyéthers (par exemple des polyéthylène-glycols), des amines primaires, secondaires ou tertiaires (par exemple des trialcanol-amines), une guanidine éventuellement substituée, notamment la diphénylguanidine, des polyorgano-siloxanes hydroxylés ou hydrolysables (par exemple des α,ω-dihydroxy-poly-organosilanes (notamment des α,ω-dihydroxy-polydiméthylsiloxanes) (voir par exemple EP 0 784 072), des acides gras comme par exemple l'acide stéarique. Lorsqu'un agent de recouvrement de la silice est utilisé, il est utilisé à un taux compris entre 0 et 5 pce. La composition de caoutchouc conforme à l'invention contient de préférence comme agent de recouvrement de la silice un polyéthylène glycol.

Selon un mode de réalisation de l'invention, la composition de caoutchouc comprend de 0 à moins de 1 pce, plus préférentiellement de 0 à moins de 0.5 pce d'un agent de couplage. Ce mode de réalisation, sous sa forme préférentiel ou non, s'applique à l'un quelconque des modes de réalisation de l'invention.

Selon un mode de réalisation préférentiel de l'invention, la composition de caoutchouc ne contient pas d'agent de couplage, ce qui revient à dire que le taux de l'agent de couplage est égal à 0 pce. Selon ce mode de réalisation, la silice n'est pas considérée comme une charge renforçante. Selon ce mode de réalisation, la composition de caoutchouc contient de préférence un agent de recouvrement de la silice tel que ceux par exemple mentionnés précédemment. L'agent de recouvrement de la silice est préférentiellement un polyéthylène glycol.

Selon ce mode de réalisation préférentiel où la silice n'est pas considérée comme une charge renforçante, le noir de carbone est de préférence la seule charge renforçante présente dans la composition de caoutchouc.

On entend par charge renforçante des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Le système de réticulation peut être à base de soufre, de donneurs de soufre, de peroxyde, de bismaléimides ou de leurs mélanges.

Selon l'un quelconque des modes de réalisation de l'invention, le système de réticulation est préférentiellement un système de vulcanisation, c'est-à-dire un système à base de soufre (ou d'un agent donneur de soufre) et d'un accélérateur primaire de vulcanisation. A ce système de vulcanisation de base peuvent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus.

Lorsque le soufre est utilisé, il est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

Le taux de soufre utilisé dans la composition de caoutchouc de la bande de roulement conforme à l'invention est le plus souvent compris entre 0,5 et 3,0 pce, celui de l'accélérateur primaire entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

La composition de caoutchouc peut comporter également tout ou partie des additifs usuels habituellement utilisés dans les compositions d'élastomères destinées à constituer des mélanges externes d'articles finis en caoutchouc tels que des pneumatiques, en particulier de bandes de roulement, comme par exemple des plastifiants ou des huiles d'extension, des pigments, des agents de protection tels que cires anti-ozone, anti-ozonants chimiques, anti-oxydants, des agents anti-fatigue.

Selon l'un quelconque des modes de réalisation de l'invention, la quantité de plastifiant, notamment huile ou autre plastifiant liquide à 23°C, est préférentiellement inférieure à 10 pce, plus préférentiellement inférieure à 5 pce.

La composition de caoutchouc peut être fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 110°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

Après l'incorporation de tous les ingrédients de la composition de caoutchouc, la composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé comme bande de roulement d'un pneumatique.

Le procédé pour préparer la bande de roulement conforme à l'invention comprend les étapes suivantes :
- ajouter au cours d'une première étape dite non productive à la matrice polyisoprène, le noir de carbone, la silice, le cas échéant l'agent de couplage, en malaxant thermomécaniquement jusqu'à atteindre une température maximale comprise entre 110 et 200°C,
- refroidir l'ensemble à une température inférieure à 110°C,
- incorporer ensuite le système de réticulation,
- malaxer le tout jusqu'à une température maximale inférieure à 110°C pour obtenir un mélange,
- calandrer ou extruder le mélange obtenu en une bande de roulement.

Le pneumatique, autre objet de l'invention, qui comprend la bande de roulement conforme à l'invention, peut être soit à l'état cru (avant réticulation ou vulcanisation), soit à l'état cuit (après réticulation ou vulcanisation).

Le pneumatique conforme à l'invention est de préférence un pneumatique pour un véhicule destiné à porter de lourdes de charges, de manière préférentielle un pneumatique destiné à rouler hors la route, de manière plus préférentielle un pneumatique pour un véhicule de génie civil.

Le pneumatique peut être préparé selon le procédé qui comprend les étapes suivantes :
- ajouter au cours d'une première étape dite non productive à la matrice polyisoprène, le noir de carbone, la silice, le cas échéant l'agent de couplage, en malaxant thermomécaniquement jusqu'à atteindre une température maximale comprise entre 110 et 200°C,
- refroidir l'ensemble à une température inférieure à 110°C,
- incorporer ensuite le système de réticulation,
- malaxer le tout jusqu'à une température maximale inférieure à 110°C pour obtenir un mélange,
- calandrer ou extruder le mélange obtenu en une bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### II.1-Mesures et tests utilisés :

### Propriétés dynamiques :

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm de hauteur et de 400 mm² de section), soumis à une sollicitation sinusoïdale en cisaillement simple alterné, à la fréquence de 10Hz, à 80°C et à 100°C. On effectue un balayage en amplitude de déformation de 0,1% à 100% (cycle aller), puis de 100% à 0,1% (cycle retour). Les résultats exploités sont le module complexe de cisaillement dynamique G* et le facteur de perte tan(δ). Sur le cycle retour, on enregistre la valeur du G* à 50% de déformation ainsi que le facteur de perte, noté tan(δ)ₘₐₓ.

Les résultats sont exprimés en base 100, la valeur 100 étant attribuée au témoin. Un résultat inférieur à 100 indique une diminution de la valeur concernée, et inversement, un résultat supérieur à 100, indique une augmentation de la valeur concernée.

### Essais de traction :

Ils sont effectués conformément à la norme française NF T 46-002 de septembre 1988. On mesure en seconde élongation (c'est-à-dire après accommodation) le module sécant nominal calculé en se ramenant à la section initiale de l'éprouvette (ou contrainte apparente, en MPa) à 10% et à 100% d'allongement noté MAS 10 et MAS 100 respectivement.
Toutes ces mesures de traction sont effectuées dans les conditions normales de température (23±2°C) et d'hygrométrie (50±5% d'humidité relative), selon la norme française NF T 40-101 (décembre 1979).
Les résultats sont exprimés en base 100, la valeur 100 étant attribuée au témoin. Un résultat inférieur à 100 indique une diminution de la valeur concernée, et inversement, un résultat supérieur à 100, indique une augmentation de la valeur concernée.

### II.2-Préparation des compositions de caoutchouc :

La composition C1 est la composition témoin qui est conventionnellement utilisée dans une bande de roulement d'un pneumatique pour un véhicule destiné à porter de lourdes charges, en particulier roulant sur des sols caillouteux tel qu'un pneumatique de véhicule de génie civil. La composition C2 est conforme à l'invention. Le détail des formulations de la composition C1 et C2 est décrit dans le tableau I. La composition C2 diffère de la composition C1 en ce qu'elle contient un caoutchouc naturel époxydé.

Les compositions C1 et C2 sont préparées conformément au procédé décrit précédemment.

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques, soit sous la forme de profilés directement utilisables, après découpage et/ou assemblage aux dimensions souhaitées, comme bande de roulement de pneumatique.

### II.3- Propriétés des compositions de caoutchouc :

Les résultats des propriétés dynamiques et des essais de traction figurent respectivement dans les tableaux II et III.

La composition C2 conforme à l'invention présente une valeur de G* 50% bien supérieure à celle de la composition C1 témoin non conforme à l'invention, aussi bien à 80°C qu'à 100°C. Par ailleurs on note que les valeurs de tan(δ)ₘₐₓ à 80°C et à 100°C de la composition C2 sont plus faibles que celles de la composition C1 témoin, ce qui traduit que la composition C2 est moins hystérétique que la composition C1 témoin. On note également des modules MAS10 et MAS100 de la composition C2 plus élevés que ceux de la composition témoin. Les résultats démontrent que l'utilisation de la composition de caoutchouc dans une bande de roulement pour pneumatique permet de réaliser une forte augmentation de la rigidité à cuit de la bande de roulement sans pénalisation de l'hystérèse de la bande de roulement. On observe plutôt une diminution de l'hystérèse de la bande de roulement. L'utilisation de la bande de roulement conforme à l'invention dans un pneumatique permet d'améliorer le compromis de performance entre la résistance à l'usure et l'endurance d'un pneumatique destiné à équiper des véhicules portant de lourdes charges, notamment ceux circulant sur des sols hors la route, comme les véhicules de chantier ou de génie civil.

**Tableau I**

| Composition | C1 | C2 |
|---|---|---|
| NR (1) | 100,00 | - |
| ENR25 (2) | - | 100,00 |
| silice (3) | 15,00 | 15,00 |
| noir (4) | 40,00 | 40,00 |
| antioxydant (5) | 2,50 | 2,50 |
| paraffine | 1,00 | 1,00 |
| PEG (6) | 2,50 | 2,50 |
| ZnO | 2,70 | 2,70 |
| acide stéarique | 1,00 | 1,00 |
| soufre | 1,70 | 1,70 |
| accélérateur (7) | 1,10 | 1,10 |

| | | |
|---|---|---|
| (1) caoutchouc naturel (2) caoutchouc naturel époxydé à 25% (3) silice « Ultrasil VN3 » de la société Evonik (4) N115 de la société Cabot (5) N-1,3-diméthylbutyl-N-phénylparaphenylènediamine, « Santoflex 6-PPD » de la société Flexsys (6) polyéthylèneglycol « CARBOWAX 8000 » de la société Dow Corning (7) N-cyclohexyl-2-benzothiazol-sulfénamide (« Santocure CBS » de la société Flexsys) | | |

**Tableau II**

| **Composition** | C1 | C2 |
|---|---|---|
| G* 50% à 100°C | 100 | 116 |
| tan(δ)ₘₐₓ à 100°C | 100 | 92 |
| G* 50% à 80°C | 100 | 115 |
| tan(δ)ₘₐₓ à 80°C | 100 | 93 |

**Tableau III**

| **Composition** | C1 | C2 |
|---|---|---|
| MAS10 à 23°C | 100 | 120 |
| MAS100 à 23°C | 100 | 120 |

## Revendications

1. Bande de roulement pour pneumatique comportant une composition de caoutchouc comprenant :
- de plus de 50 à 100 pce d'une matrice polyisoprène, la matrice polyisoprène contenant un polyisoprène époxydé ayant un taux molaire d'époxydation allant de 5% à moins de 50%,
- un noir de carbone et une silice, la masse de noir de carbone étant supérieure à 50% de la masse totale de noir de carbone et de silice,
- de 0 à moins de 2 pce d'un agent de couplage,
- un système de réticulation,
le polyisoprène époxydé étant un caoutchouc naturel époxydé ou un polyisoprène de synthèse époxydé ayant un taux molaire de liaison 1,4-cis d'au moins 90% avant époxydation ou leur mélange,
à condition que si le polyisoprène époxydé est un polyisoprène époxydé ayant un taux molaire d'époxydation de 5% à 25%, la composition de caoutchouc contient plus de 50 pce de polyisoprène époxydé.

2. Bande de roulement selon la revendication 1 dans laquelle le taux de l'agent de couplage est de 0 à moins de 1 pce, plus préférentiellement de 0 à moins de 0.5 pce.

3. Bande de roulement selon la revendication 1 ou 2, dans laquelle le taux de noir de carbone est de 30 pce à 90 pce, préférentiellement de 30 à 70 pce, plus préférentiellement de 35 pce à 60 pce.

4. Bande de roulement selon l'une quelconque des revendications 1 à 3, dans laquelle le taux de silice est supérieur à 0 pce et inférieur ou égal à 35 pce, de préférence le taux de silice est de 2 à 35 pce.

5. Bande de roulement selon l'une quelconque des revendications 1 à 4, dans laquelle le polyisoprène époxydé est un caoutchouc naturel époxydé.

6. Bande de roulement selon l'une quelconque des revendications 1 à 5, dans laquelle le polyisoprène époxydé est un polyisoprène époxydé ayant un taux molaire d'époxydation de 5% à 35%, de préférence de 5% à 30%.

7. Bande de roulement selon l'une quelconque des revendications 1 à 5, dans laquelle le polyisoprène époxydé est un polyisoprène époxydé ayant un taux molaire d'époxydation de 5% à 40%, de préférence de 10% à 35%.

8. Bande de roulement selon l'une quelconque des revendications 1 à 8, dans laquelle le taux de la matrice polyisoprène est supérieur à 80 pce.

9. Bande de roulement selon la revendication 6, dans laquelle le taux de polyisoprène époxydé est supérieur à 80 pce, de préférence égal à 100 pce.

10. Bande de roulement selon l'une quelconque des revendications 1 à 9, dans laquelle la matrice polyisoprène contient un polyisoprène ayant un taux molaire de liaison 1,4-cis d'au moins 90%.

11. Bande de roulement selon la revendication 10, dans laquelle la matrice polyisoprène est un mélange du polyisoprène ayant un taux molaire de liaison 1,4-cis d'au moins 90% et du polyisoprène époxydé.

12. Bande de roulement selon la revendication 10 ou 11, dans laquelle le polyisoprène ayant un taux molaire de liaison 1,4-cis d'au moins 90% est le caoutchouc naturel.

13. Pneumatique qui comprend une bande de roulement définie selon l'une quelconque des revendications 1 à 12.

14. Pneumatique selon la revendication 13, lequel pneumatique est destiné à porter de lourdes charges.

15. Procédé pour préparer la bande de roulement selon l'une quelconque des revendications 1 à 12, lequel procédé comprend les étapes suivantes :
- ajouter au cours d'une première étape dite non productive à la matrice polyisoprène, le noir de carbone, la silice, le cas échéant l'agent de couplage, en malaxant thermomécaniquement jusqu'à atteindre une température maximale comprise entre 110 et 200°C,
- refroidir l'ensemble à une température inférieure à 110°C,
- incorporer ensuite le système de réticulation,
- malaxer le tout jusqu'à une température maximale inférieure à 110°C pour obtenir un mélange,
- calandrer ou extruder le mélange obtenu en une bande de roulement.

## Patentansprüche

1. Lauffläche für Reifen, umfassend eine Kautschukzusammensetzung, umfassend:
- von mehr als 50 bis 100 phr einer Polyisoprenmatrix, wobei die Polyisoprenmatrix ein epoxidiertes Polyisopren enthält, das ein Molverhältnis der Epoxidierung im Bereich von 5 % bis weniger als 50 % aufweist,
- ein Ruß und ein Siliciumdioxid, wobei die Rußmasse größer als 50 % der Gesamtmasse von Ruß und Siliciumdioxid ist,
- von 0 bis weniger als 2 phr eines Kupplungsmittels,
- ein Vernetzungssystem,
wobei das epoxidierte Polyisopren ein epoxidierter Naturkautschuk oder ein epoxidiertes synthetisches Polyisopren, das ein Molverhältnis an cis-1,4-Bindung von mindestens 90 % vor der Epoxidierung aufweist, oder deren Mischung ist,
unter der Bedingung, dass, wenn das epoxidierte Polyisopren ein epoxidiertes Polyisopren ist, das ein Molverhältnis der Epoxidierung von 5 % bis 25 % aufweist, die Kautschukzusammensetzung mehr als 50 phr epoxidiertes Polyisopren enthält.

2. Lauffläche nach Anspruch 1, wobei der Kupplungsmittelgehalt 0 bis weniger als 1 phr, vorzugsweise 0 bis weniger als 0,5 phr beträgt.

3. Lauffläche nach Anspruch 1 oder 2, wobei der Rußgehalt von 30 phr bis 90 phr, vorzugsweise von 30 bis 70 phr, insbesondere von 35 phr bis 60 phr beträgt.

4. Lauffläche nach einem der Ansprüche 1 bis 3, wobei der Siliciumdioxidgehalt höher als 0 phr und niedriger als oder gleich 35 phr ist, vorzugsweise beträgt der Siliciumdioxidgehalt von 2 bis 35 phr.

5. Lauffläche nach einem der Ansprüche 1 bis 4, wobei das epoxidierte Polyisopren ein epoxidierter Naturkautschuk ist.

6. Lauffläche nach einem der Ansprüche 1 bis 5, wobei das epoxidierte Polyisopren ein epoxidiertes Polyisopren ist, das ein Molverhältnis der Epoxidierung von 5 % bis 35 %, vorzugsweise von 5 % bis 30 % aufweist.

7. Lauffläche nach einem der Ansprüche 1 bis 5, wobei das epoxidierte Polyisopren ein epoxidiertes Polyisopren ist, das ein Molverhältnis der Epoxidierung von 5 % bis 40 %, vorzugsweise von 10 % bis 35 % aufweist.

8. Lauffläche nach einem der Ansprüche 1 bis 8, wobei der Gehalt an Polyisoprenmatrix größer als 80 phr ist.

9. Lauffläche nach Anspruch 6, wobei der Gehalt an epoxidiertem Polyisopren größer als 80 phr, vorzugsweise gleich 100 phr ist.

10. Lauffläche nach einem der Ansprüche 1 bis 9, wobei die Polyisoprenmatrix ein Polyisopren enthält, das ein Molverhältnis an cis-1,4-Bindung von mindestens 90 % aufweist.

11. Lauffläche nach Anspruch 10, wobei die Polyisoprenmatrix eine Mischung aus Polyisopren, das ein Molverhältnis an cis-1,4-Bindung von mindestens 90 % aufweist, und epoxidiertem Polyisopren ist.

12. Lauffläche nach Anspruch 10 oder 11, wobei das Polyisopren, das ein Molverhältnis an cis-1,4-Bindung von mindestens 90 % aufweist, Naturkautschuk ist.

13. Reifen, der eine Lauffläche aufweist, die nach einem der Ansprüche 1 bis 12 definiert ist.

14. Reifen nach Anspruch 13, wobei der Reifen dazu bestimmt ist, schwere Lasten zu tragen.

15. Verfahren zur Herstellung der Lauffläche nach einem der Ansprüche 1 bis 12, wobei das Verfahren die folgenden Schritte aufweist:
- während eines ersten sogenannten nicht-produktiven Schritts zu der Polyisoprenmatrix Ruß, Siliciumdioxid, gegebenenfalls das Kupplungsmittel durch thermomechanisches Kneten hinzufügen, bis eine Maximaltemperatur zwischen 110 und 200 °C erreicht wird,
- das Ganze auf eine Temperatur von unter 110 °C abkühlen,
- anschließend das Vernetzungssystem einarbeiten,
- das Ganze bis auf eine Maximaltemperatur von unter 110 °C kneten, um eine Mischung zu erhalten,
- die erhaltene Mischung zu einer Lauffläche kalandrieren oder extrudieren.

## Claims

1. Tyre tread comprising a rubber composition comprising:
- from more than 50 to 100 phr of a polyisoprene matrix, the polyisoprene matrix containing an epoxidized polyisoprene having a molar degree of epoxidation ranging from 5% to less than 50%,
- a carbon black and a silica, the weight of carbon black being greater than 50% of the total weight of carbon black and silica,
- from 0 to less than 2 phr of a coupling agent,
- a crosslinking system,
the epoxidized polyisoprene being an epoxidized natural rubber or an epoxidized synthetic polyisoprene having a molar content of 1,4-cis bonds of at least 90% before epoxidation, or a mixture thereof,
with the proviso that, if the epoxidized polyisoprene is an epoxidized polyisoprene having a molar degree of epoxidation of from 5% to 25%, the rubber composition contains more than 50 phr of epoxidized polyisoprene.

2. Tread according to Claim 1, wherein the content of the coupling agent is from 0 to less than 1 phr, more preferentially from 0 to less than 0.5 phr.

3. Tread according to either one of Claims 1 and 2, wherein the content of carbon black is from 30 to 90 phr, preferentially from 30 to 70 phr, more preferentially from 35 to 60 phr.

4. Tread according to any one of Claims 1 to 3, wherein the content of silica is greater than 0 phr and less than or equal to 35 phr, preferably the content of silica is from 2 to 35 phr.

5. Tread according to any one of Claims 1 to 4, wherein the epoxidized polyisoprene is an epoxidized natural rubber.

6. Tread according to any one of Claims 1 to 5, wherein the epoxidized polyisoprene is an epoxidized polyisoprene having a molar degree of epoxidation of from 5% to 35%, preferably from 5% to 30%.

7. Tread according to any one of Claims 1 to 5, wherein the epoxidized polyisoprene is an epoxidized polyisoprene having a molar degree of epoxidation of from 5% to 40%, preferably from 10% to 35%.

8. Tread according to any one of Claims 1 to 8, wherein the content of the polyisoprene matrix is greater than 80 phr.

9. Tread according to Claim 6, wherein the content of epoxidized polyisoprene is greater than 80 phr, preferably equal to 100 phr.

10. Tread according to any one of Claims 1 to 9, wherein the polyisoprene matrix contains a polyisoprene having a molar content of 1,4-cis bonds of at least 90%.

11. Tread according to Claim 10, wherein the polyisoprene matrix is a mixture of the polyisoprene having a molar content of 1,4-cis bonds of at least 90% and the epoxidized polyisoprene.

12. Tread according to either one of Claims 10 and 11, wherein the polyisoprene having a molar content of 1,4-cis bonds of at least 90% is natural rubber.

13. Tyre comprising a tread defined according to any one of Claims 1 to 12.

14. Tyre according to Claim 13, which tyre is intended to bear heavy loads.

15. Process for preparing the tread according to any one of Claims 1 to 12, which process comprises the following steps:
- adding the carbon black, the silica and, if appropriate, the coupling agent to the polyisoprene matrix during a first "non-productive" step by kneading thermomechanically until a maximum temperature of between 110°C and 200°C is reached,
- cooling the combined mixture to a temperature of less than 110°C,
- subsequently incorporating the crosslinking system,
- kneading everything up to a maximum temperature of less than 110°C in order to obtain a mixture,
- calendering or extruding the mixture obtained into a tread.
